# EUROPEAN PATENT SPECIFICATION

(11) **EP 2 203 680 B1**
(45) Date of publication and mention of the grant of the patent: **23.12.2015**
(21) Application number: 08783280.4
(22) Date of filing: 25.07.2008
(51) Int. Cl.: C01B 17/54, C01B 17/74, F02C 3/20, F02C 3/30, C01B 17/04, F02C 6/10, F02C 6/18

(54) **METHODS AND SYSTEMS FOR SULPHUR COMBUSTION**
VERFAHREN UND SYSTEME ZUR VERBRENNUNG VON SCHWEFEL
PROCÉDÉS ET SYSTÈMES POUR LA COMBUSTION DE SOUFRE

(30) Priority: 25.09.2007 US 974965 P
(43) Date of publication of application: 07.07.2010
(73) Proprietor: Wojak, Bogdan, British Columbia V6T 1T7 (CA)
(72) Inventor: Wojak, Bogdan, British Columbia V6T 1T7 (CA)
(74) Representative: Petraz, Gilberto Luigi
(86) International application number: PCT/CA2008/001367
(87) International publication number: WO 2009/039611

(56) References cited:
- WO-A2-2007/090671
- CA-A1- 2 142 170
- JP-A- 2000 213 371
- US-A- 4 396 594
- US-A- 4 618 723
- US-A- 5 609 845

## Description

### BACKGROUND

The production of electric power from fuel is based on the conversion of the latent chemical combustion energy of fuel into heat, with subsequent conversion of heat into mechanical energy and to electric energy. Hydrocarbons such as coal, natural gas, and petroleum products are the most commonly used fuels however its combustion is accompanied by the emission of carbon dioxide (CO₂) which, until recently, was thought to be harmless but has subsequently been found to have a major deleterious effect on global warming. Most fossil fuels also contain sulfur compounds in various forms. Combustion of fuels containing sulphur produces, in addition to CO₂, sulphur dioxide (SO₂). SO₂ dissolves in water vapor to form acid, and interacts with other gases and particles in the air to form sulfates and other products that can be harmful to people and the environment.

On the other hand, aside from hydrocarbons, sulphur is the only other naturally occurring material from which energy can be harnessed by combustion. Despite this fact, the use of sulphur compounds as a source of energy has been largely ignored.

Burning sulfur in pure oxygen in stoichiometric quantities produces extremely high temperatures of more than 5,000° C. The calculated flame temperature when the reactants (SO₂, SO, S₂, S and O₂) are in equilibrium, taking into account dissociation processes, is about 3000-3500° C. WO 2007/090671 discloses an apparatus for sulphur combustion. US 4,396,594 discloses a sulphur-dioxide reduction process.

### SUMMARY

An innovative method and system for combusting sulphur with no harmful emission of carbon dioxide to the environment can be used for a variety of applications, including power generation, the production of elemental sulphur, and the production of carbon monoxide. In general, sulphur is evaporated by reaction of oxygen with liquid sulphur that is maintained in the region of its auto-ignition temperature which is about 260° C. Oxygen and liquid sulphur immediately react to form sulphur dioxide but, because the liquid sulphur is heated continuously by the combustion reaction, substantial amounts of sulphur are vaporized into the sulphur dioxide containing gas leaving the liquid sulphur:

S_{8 liquid (260 °C)} + O_{2 gas} → SO_{2 gas} + heat + 3S_{2 vapor} (1)

Subsequently, the thermodynamic energy contained in the sulphur vapor (S₂) is converted into heat energy through stoichiometric (or near-stoichiometric) interaction with oxygen:

S₂ + 2O₂ → 2SO₂ + heat (2)

Because of the chain character of the burning process, the sulphur vapor (S₂) bums in oxygen in tenths of a second attaining a temperature level close to the theoretical adiabatic temperature of about 3000-3500 °C. This high temperature is a key element of the process as it provides a major pathway for complete reduction of sulphur dioxide by carbonyl sulphide (COS) to carbon dioxide and sulphur vapor according to overall equation (3):

SO₂ + 2COS → 2CO₂ + ³/₂S₂ (3)

The carbonyl sulphide (COS) can be generated by chemical reaction between a supply of hydrogen sulphide (H₂S) flowing into the system and a supply of recycled carbon dioxide in which the H₂S is converted to COS and water (H₂O):

H₂S + CO₂→ COS + H₂O (4)

In terms of material balance, the mass equivalent of sulphur, oxygen and hydrogen sulphide that enter the system are removed from the system in the form of recovered elemental sulphur and water. Not only is the elemental sulphur a useful product, but the water in the form of steam can be used to do useful work or generate power.

This sulphur combustion method and system produces with minimal if any harmful emission of sulphur dioxide to the environment due to reduction of sulphur dioxide to sulphur vapor and carbon dioxide (either at high temperature or catalytically at low temperature). In one main implementation of this technology, the entire amount of carbon dioxide that is generated from the reduction of sulphur dioxide is recycled to regenerate carbonyl sulphide, thus providing a "zero-carbon emission" combustion method and system. This "zero-emission" system can be configured to leak no carbon to the environment or, in other embodiments, it may be configured to allow only a very small amount of carbon to the atmosphere.

In other words, a method and system for combusting sulphur combustion is unimpeded by sulphur oxides. This method of harnessing energy from sulphur combustion is due to the reduction of sulphur dioxide by carbonyl sulphide. In one main implementation of this technology, the entire carbon dioxide generated through this reduction reaction of sulphur dioxide is recycled to regenerate carbonyl sulphide, thus providing a so-called "zero-carbon emission" combustion method and system. In terms of material balance, the mass equivalent of sulphur, oxygen and hydrogen sulphide that enter the system are removed from the system in the form of recovered elemental sulphur and water.

In accordance with one aspect of the present invention, a method for the conversion of the latent chemical combustion energy of sulphur into heat with minimal, if any, harmful emissions to the environment comprises combusting sulphur vapor (S₂) in oxygen (O₂) in a combustor/reactor and subsequently reacting sulphur dioxide (SO₂) with carbonyl sulphide (COS) to yield combustion gases comprising carbon dioxide (CO₂) and sulphur vapor (S₂). The method may further comprise providing one or more heat recovery and sulphur condensation units for recovering heat from the combustion gases and for condensing the sulphur vapor to yield recyclable carbon dioxide (CO₂), elemental sulphur (S), liquid S₈, and steam for any number of industrial applications or for power generation. The heat recovery and sulphur condensation units can be separate units or combined as a single unit that performs both heat recovery and condensation functions.

In accordance with another aspect of the present invention, a method for generating thermodynamic energy from sulphur combustion comprises catalytically reducing sulphur dioxide (SO₂) in the presence of carbonyl sulphide (COS) to generate carbon dioxide and sulphur vapor (S₂), condensing the sulphur vapor to yield liquid sulphur, evaporating the liquid sulphur to generate sulphur dioxide gas and sulphur vapor, combusting the sulphur vapor with oxygen gas (O₂) to generate hot sulphur dioxide gas, mixing in an ejector the hot sulphur dioxide gas with cooler, lower-pressure sulphur dioxide gas that is recycled from downstream of at least one turbine, and harnessing energy in the sulphur dioxide gas that emerges from the ejector.

In accordance with yet another aspect of the present invention, a method for hydrogen sulfide (H₂S) conversion to elemental sulphur and water comprises steps of evaporating liquid sulphur to generate sulphur dioxide (SO₂) gas and sulphur vapor (S₂) and combusting the sulphur vapor (S₂) with oxygen gas (O₂) to generate heat. The method further comprises a step of reducing at high temperature the sulphur dioxide (SO₂) to carbon dioxide (CO₂) and sulphur vapor (S₂) by reacting the sulphur dioxide (S₂) with carbonyl sulfide (COS). The COS may be generated by reacting hydrogen sulfide (H₂S) with recycled carbon dioxide (CO₂) that is recycled by condensing sulphur vapor and carbon dioxide to yield liquid S₈, elemental sulphur (S), and CO₂. The method may further comprise a step of heat recovery to produce steam. The steam can be used, for example, to drive a turbine to generate electricity.

In accordance with yet another aspect of the present invention, a method for transporting sulphur in form of COS gas by pipeline comprises steps of receiving hydrogen sulphide (H₂S) and carbon dioxide (CO₂) into a carbonyl sulphide (COS) generator and generating COS and H₂O. The COS can then be transported, for example by pipeline, to a sulphur-recovery plant at a remote location for subsequent recuperation of elemental sulphur and energy generation according to one or more of the methods described herein.

In accordance with yet a further aspect of the present invention, a method for generating carbon monoxide comprises a step of interacting at high temperature carbonyl sulphide (COS) with sulphur dioxide (SO₂) in the presence of carbon dioxide (CO₂) to yield S₂, and carbon monoxide (CO) as a predominate gas. The sulphur dioxide (SO₂) and heat are results of sulphur vapor (S₂) combustion in oxygen (O₂). The method then entails rapidly cooling the S₂, and CO while condensing the S₂ in order to transform the S₂ into liquid sulphur (S₈) and elemental sulphur (S), and to prevent CO and S₂ re-associating to form COS. Optionally, a further step involves separating the CO from the remaining CO₂. This is a useful emission-free method for producing CO for any number of industrial applications.

In accordance with yet another aspect of the present invention, a system for burning sulphur has a combustor/reactor for combusting/reacting sulphur dioxide (SO₂), sulphur vapor (S₂), carbonyl sulphide (COS) and oxygen (O₂) to yield hot combustion gases comprising carbon dioxide (CO₂) and sulphur vapor (S₂). The system also has an ejector disposed downstream of the combustor/reactor for reducing a temperature and pressure of the hot combustion gases by exchanging heat and pressure with a supply of carbonyl sulphide. The system also has a carbonyl sulphide generator for generating the carbonyl sulphide supplied to the ejector.

In accordance with yet another aspect of the present invention, a method for the conversion of the latent chemical combustion energy of sulphur into heat without causing harmful emissions to the environment comprises steps of evaporating liquid sulphur to generate sulphur dioxide (SO₂) gas and sulphur vapor (S₂) and combusting the sulphur vapor (S₂) with oxygen gas (O₂) to generate heat. The sulphur can be evaporated and the sulphur vapor oxidized under a pressure, for example, of 1 to 35 atmospheres. The system may also have an ejector disposed downstream of the combustor for heat and pressure exchange between the hot and pressurized sulphur dioxide (SO₂) and the low-temperature, unpressurized carbonyl sulphide which results in generation of a high-energy working medium comprising sulphur vapor and carbon dioxide. The method further comprises a step of harnessing the energy of this working medium through gas and steam turbines, for example to generate electricity.

In accordance with yet another aspect of the present invention, a system for burning sulphur comprises a combustor for combusting sulphur vapor (S₂) and oxygen (O₂) to yield hot combustion gases comprising sulphur dioxide (SO₂). The system also comprises an ejector disposed downstream of the combustor for reducing a temperature and pressure of the hot combustion gases by exchanging heat and pressure with a supply of recycled sulphur dioxide gas to generate a stream of sulphur dioxide gas at a reduced temperature and pressure, wherein the recycled sulphur dioxide gas is recycled from downstream of at least one turbine that harnesses energy from the stream of sulphur dioxide emerging from the ejector.

### BRIEF DESCRIPTION OF THE DRAWINGS

FIG. **1** is a schematic diagram of an embodiment of a system adapted for using thermodynamic energy contained in sulphur in the generation of thermal energy and sulphur recovery in accordance with one embodiment of the present invention.
FIG. **2** is a schematic diagram of a system adapted as a non-polluting (zero emissions) semi-closed gas turbine cycle in which a working fluid takes its energy from stoichiometric (or near-stoichiometric) interaction (combustion, burning) between sulphur vapor and oxygen.
FIG. **3** is a schematic diagram of mass and energy flow for the system at 10 atm wherein the mass and energy flow values are computed based on a simulation that assumes chemical reaction equilibrium in the heat-recovery steam generator (HRSG), in Condenser-1, and also in Condenser-2.
FIG. **4** is a schematic diagram of mass and energy flow for the system at 30 atm wherein the mass and energy flow values are computed based on a simulation that assumes chemical reaction equilibrium in the heat-recovery steam generator (HRSG), in Condenser-1, and also in Condenser-2.
FIG. **5** is a schematic diagram of mass and energy flow for the system at 10 atm wherein the mass and energy flow values are computed based on a simulation that assumes that there is no chemical reaction equilibrium in the HRSG, Condenser-1, and Condenser-2.
FIG. **6** is a schematic diagram of mass and energy flow for the system at 30 atm wherein the mass and energy flow values are computed based on a simulation that assumes that there is no chemical reaction equilibrium in the HRSG, Condenser-1, and Condenser-2.
FIG. **7** is a schematic diagram of an embodiment of a variant system adapted for converting sulphur to COS for shipment by pipeline according to one embodiment of the present invention.

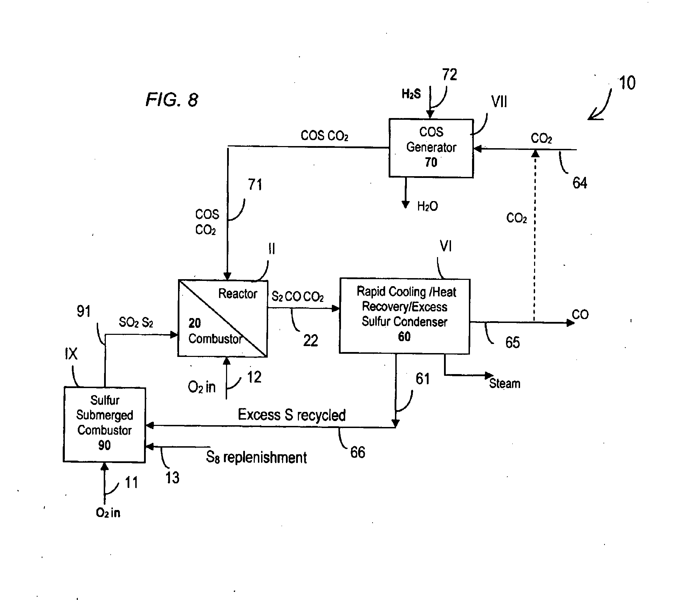

FIG. **8** is a schematic diagram of an embodiment of a variant system adapted for using thermodynamic energy contained in sulphur in the generation of thermal energy, sulphur recovery and carbon monoxide production according to one embodiment of the present invention.
FIG. **9** is a schematic diagram of a variant of the system implementing a semi-closed gas turbine cycle in which a working fluid takes its energy from stoichiometric (or near-stoichiometric) interaction (combustion, burning) between sulphur vapor and oxygen.

### DETAILED DESCRIPTION

Traditionally, the production of electric power from fuel is based on the conversion of the latent chemical combustion energy of fuel into heat, with the subsequent conversion of heat into mechanical energy and to electric energy. Hydrocarbons and sulphur are believed to be the only naturally occurring materials from which energy can be harnessed by combustion. Combustion of hydrocarbons is accompanied by the emission of carbon dioxide (CO₂) which, until recently, was thought to be harmless but has subsequently been found to have a major deleterious effect on global warming. Combustion of sulphur produces sulphur dioxide (SO₂). SO₂ dissolves in water vapor to form acid, and interacts with other gases and particles in the air to form sulfates and other products that are harmful to people and the environment.

A method and system for sulphur combustion without sulphur oxides impediments is provided. This method of harnessing energy from sulphur combustion is due to the reduction of sulphur dioxide by carbonyl sulphide to sulphur vapor (S₂) and carbon dioxide (CO₂). In one main implementation of this technology, the entire carbon dioxide generated through this reduction reaction of sulphur dioxide is recycled to regenerate carbonyl sulphide, thus providing a zero-carbon emission combustion method and system. In terms of material balance, the mass equivalent of sulphur, oxygen and hydrogen sulphide that enter the system are removed from the system in the form of recovered elemental sulphur and water.

In general, and as will be elaborated below, sulphur is evaporated by the reaction of oxygen with liquid sulphur that is maintained in the region of its auto-ignition temperature which is about 260° C. Oxygen and liquid sulphur immediately react to form sulphur dioxide but, because the liquid sulphur is heated continuously by the combustion reaction, substantial amounts of sulphur are vaporized into the sulphur dioxide containing gas leaving the liquid sulphur:

S₈ l_{iquid (260 °C)} + O_{2 gas} → SO_{2 gas} + heat + 3S₂ vapor (1)

Subsequently, the thermodynamic energy contained in the sulphur vapor (S₂) is converted into heat energy through stoichiometric (or near-stoichiometric) interaction with oxygen:

S₂ + 2O₂ → 2SO₂ + heat (2)

Because of the chain character of the burning process, the sulphur vapor (S₂) bums in oxygen in tenths of a second attaining a temperature level close to the theoretical adiabatic temperature of about 3000-3500 °C. This high temperature is the key element of the process as it provides a major pathway for complete reduction of sulphur dioxide by carbonyl sulphide (COS) to carbon dioxide and sulphur vapor according to overall equation (3):

SO₂ + 2COS → 2CO₂ + ³/₂S₂ (3)

The carbonyl sulphide (COS) can be generated by chemical reaction between a supply of hydrogen sulphide (H₂S) flowing into the system and a supply of recycled carbon dioxide in which the H₂S is converted to COS and water (H₂O):

H₂S + CO₂→ COS + H₂O (4)

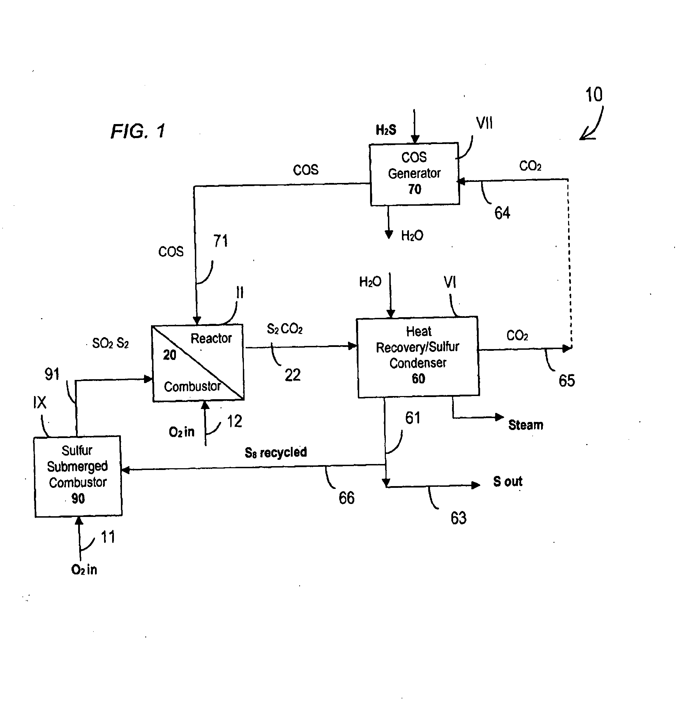

As depicted in FIG. **1**, a system **10** comprises four main stages (**II**, **VI**, **VII**, **IX**,) each having at least one unit to assist in the process of generating thermal energy. Moreover, the illustrated system **10** comprises a combustor/reactor **20** at stage **II**, a heat-recovery/sulphur condenser **60** at stage **VI**, a COS generator (e.g. molecular sieve tower(s)) **70** at stage **VII**, and sulphur-submerged combustion furnace **90** at stage **IX**, which all cooperate to constitute a system for generating thermal energy without harmful emissions to the environment.

In one embodiment, the sulphur is evaporated by bubbling oxygen through molten sulphur at a temperature at which the sulphur boils, which ensures maximum evaporation of the sulphur. Oxygen is introduced into the bubbling chamber by line **11**, is sparged through the molten bed of sulphur. The oxygen comprises substantially pure oxygen as the only gas. The pool of liquid sulphur is maintained above its auto-ignition temperature so that oxygen injected beneath the surface of this pool bubbles through the molten sulphur. As a result, sulphur vapor and sulphur dioxide are produced, the sulphur vapor being extremely useful as it can be combusted with oxygen to generate extremely high temperatures.

The composition of the vapor-gas mixture, as it flows from the bubbling chamber **90,** is determined by the process parameters, such as pressure, temperature, and heat loss. The sulphur vapor may comprise diatomic sulfur gas or a combination of various sulfur species. In the method described, the heat of the reaction in the bubbling zone of the furnace is consumed to evaporate sulphur, and to heat the melt to working temperature.

As is shown in **FIG. 1****,** sulphur vapor and sulphur dioxide exit from the vaporizer **90** as stream **91** at a temperature of 700-800 °C. This stream **91** is directed into the combustor/reactor **20** at stage **II**. Oxygen is injected into the combustor/reactor **20** through line **12** and the sulphur vapor is oxidized through stoichiometric (or near-stoichiometric) interaction with oxygen so that only SO₂ is produced:

S₂ + 2O₂ → 2SO₂ + heat (2)

Because of the chain character of the burning process, sulphur vapor bums in oxygen in tenths of a second, attaining a temperature level close to the adiabatic temperature of about 3000-3500 °C. To achieve the desired chemical composition and temperature for the fluid egressing from the combustor/reactor, the sulphur dioxide gas is mixed with a predetermined amount of carbonyl sulphide that is carried into the combustor/reactor **20** through conduit **71.** The carbonyl sulphide predominates in relation to the volume of sulphur dioxide that has to be entirely reduced to carbon dioxide and sulphur vapor (3), and to desirable ranges of the temperature:

SO₂ + 2COS → 2CO₂ + ³/₂S₂ (3)

To give insight into how fast the reaction between COS, SO₂ can occur, and how the various reaction products evolve as a function of reaction time the computation of chemical equilibrium composition was carried out using free energy minimization software over a range of temperature (700-2000K), pressure (1-35 atm), and COS:SO₂ ratio (0.6:1 to 2.4:1). The reaction between COS and SO₂ was simulated in COMSOL Reaction Engineering Laboratory software using the Leeds Sulphur Mechanism Version 5.2 [Sulphur Mechanism v5.2 available from http://www.chem.leeds.ac.uk/Combustion /sox.htm].

It was observed from the simulation results that the reaction between COS and SO₂ at high temperature is extremely rapid and that a majority of the reaction is complete within the first 100 milliseconds. Consistent with the equilibrium predictions, the most significant species of the reaction are CO₂, S₂ and CO. The kinetic simulations also show that the reaction product distribution expectedly varies with time. However, an important insight gained from the simulation results is that, at a very early stage (<<100 ms), the primary product of the reaction is CO and S₂ but, at longer times, the formation of CO₂ occurs seemingly at the cost of CO consumption. The implication of this insight is that that the reaction product composition can, in principle, be controlled to comprise primarily CO and S₂ by controlling reaction times or by an increase in carbon dioxide concentration during interaction of these gases. Therefore, this technology has potential to be used to produce carbon monoxide. If such reaction conditions are realized, the resulting reaction product would be favorable for re-association of CO and sulphur to yield COS in the lower temperature process units, if desired.

After a reduction reaction in the combustor/reactor **20** at stage **II**, the sulphur vapor (S₂) and CO₂ gas are cooled down in a heat-recovery/condenser **60** at stage **VI** where the sulphur is condensed (back to liquid form) and recycled through line **66** and its excess

(in the form of elemental sulphur) removed (recovered) from the system **10** through conduit **63.**

The carbonyl sulphide may be partially regenerated by recombination of carbon monoxide and diatomic sulphur at some point in the overall process and the recombination is favored to occur during the cooling of exhaust but primarily will be regenerated by the interaction between recycled carbon dioxide and hydrogen sulphide flowing into the system according to the following equation:

H₂S + CO₂ ↔ COS + H₂O (4)

Formation of carbonyl sulphide according to reaction (1) can be conducted in either the liquid or vapor phase. The details are published at the Transcripts of the Faraday Society, M. M. Sharms, 61 (508), page 681 (1965) and Journal of Catalysis, Akimoto and Dalla Lana, 62, 84 (1980) which is incorporated herein by reference.

Interestingly, due to the natural gas dehydration process the adsorbents used will, through the removal of the water in the gas stream, tend to drive the reaction toward the formation of COS. This is particularly the case with molecular sieves, which are the strongest dehydration agent. The phenomenon has been identified as the simultaneous H₂S adsorption and rate-limited catalytic reaction of H₂S and CO₂ to form carbonyl sulphide and water.

The carbonyl sulfide can be formed in the system **10,** from the hydrogen sulfide and carbon dioxide in a dryer (or multiple dryers) **70** at stage **VII** comprising a desiccant (e.g. a molecular sieve tower and/or alumina desiccants) and configured to receive a feed gas comprising hydrogen sulfide and carbon dioxide entering through lines **72** and **64**, respectively, wherein the desiccant has sufficient water affinity to convert the hydrogen sulfide to carbonyl sulfide. All known desiccants are considered suitable for use herein. For example, contemplated desiccants include molecular sieves and/or alumina desiccants. The desiccant may be coated with a COS hydrolysis catalyst (*e.g*., gamma alumina coated with an alkali metal oxide). As COS hydrolysis is an equilibrium process (4), and it should be recognized that by continuous removal of water from a hydrogen sulfide-containing gas in the desiccant bed, the reaction shifts from COS hydrolysis towards the production of COS and additional water (which is removed by the desiccant). Therefore, under some conditions, the hydrogen sulfide in the gas is converted to COS under concomitant removal of water, and the resulting dried gas will then predominantly include COS.

The most efficient way of utilizing heat for power production is to expand the hot reaction products of the above-described process to directly produce work in a turbine expander and then to recover the remaining heat of the gas turbine exhaust gas by producing steam for driving a steam turbine.

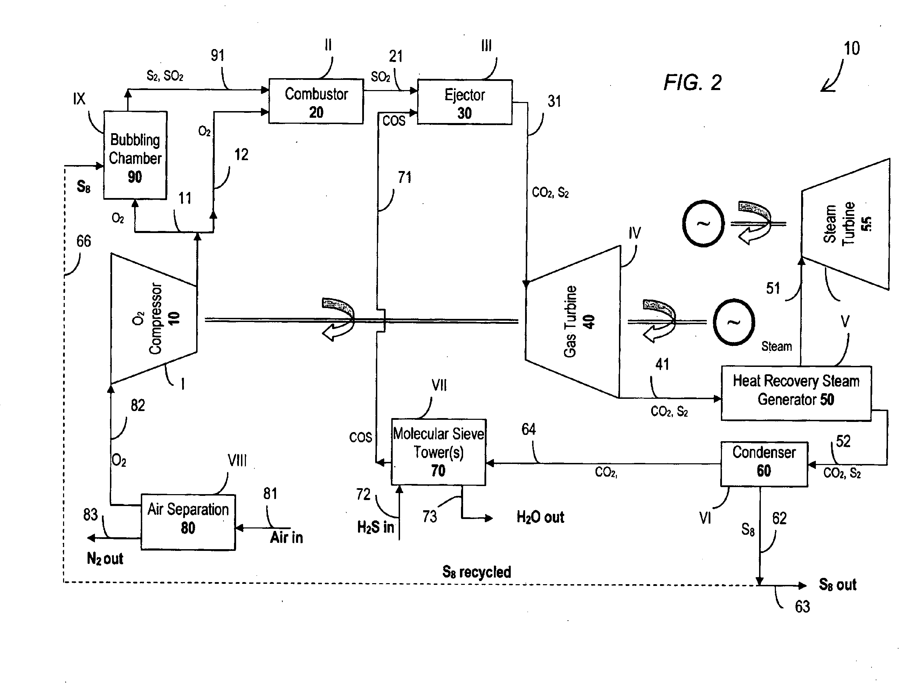

FIG. **2** shows an embodiment of a system **10** adapted as a semi-closed combined-turbines cycle in which a gas turbine working fluid takes its energy from a high-temperature gas stream generated through stoichiometric or near-stoichiometric interaction between sulphur vapor and oxygen and applies an innovative method for avoiding the maximum temperature constraints of the turbine by incorporating a pressure-exchange device, such an ejector, whereby the stream of sulfur dioxide exhausted from the combustor is elevated to a much higher temperature than would normally be permissible for entry into the turbine.

In the pressure-exchange devices, the hot gases generated in the combustor at temperatures above the tolerance of available gas turbines are used to compress another gas in an ejector. They are cooled thereby to a level acceptable for use in present-day turbines by a flow-induction process which produces compression work on another gas. From the view point of the second law of thermodynamics, the straight cooling of combustion gases from the combustion temperature to a temperature that is acceptable for turbine operation, as practiced in conventional systems, destroys completely the exergy contained between these two temperatures. Here, the same cooling is accomplished with concomitant production of useful work. The ejector, as opposed to the turbines, can operate at very high temperatures because of its inherently simple construction which results in very low mechanical stress and high reliability. However, the nature and physical conditions of the driving (primary) and entrained (secondary) fluids determine the overall conventional steady-flow ejector performance which, in general, is much poorer than that of mechanical compressors such as centrifugal or axial types. One of the main reasons for the modest efficiency of conventional steady-flow ejector-powered processes is the comparatively large mass flow ratio between the entrained and entraining fluids. The efficiency of the energy transfer can be significantly increased with the higher molecular weight ratio. Therefore, prior art conceptual applications proposed working fluids that included helium as the secondary fluid and sodium or liquid metal as the primary fluid. This was difficult to implement, however.

In an ejector, momentum can be imparted from the primary fluid to the secondary fluid by two mechanisms: the shear stresses at the tangential interfaces between the primary and secondary fluids as a result of turbulence and viscosity; and, the work of interface pressure forces acting across normal interfaces separating the primary and secondary fluids. The latter mechanism is called pressure exchange. Pressure exchange is available only in a non-steady flow field. Utilizing the reversible work of pressure forces acting at fluid interfaces between primary flow and secondary flow, a pressure exchange ejector has the potential for much greater momentum transfer efficiency than that of a conventional ejector that relies on dissipative turbulent mixing.

Garris in U.S. Patent No. 6,438,494 disclosed a novel pressure-exchange compressor-expander, whereby a higher-energy primary fluid compresses a lower-energy secondary fluid through direct fluid-fluid momentum exchange. The pressure-exchange compressor-expander utilizes non-steady flow principles and supersonic flow principles to obtain an ejector-compressor which can attain high adiabatic efficiencies while having a simple design, small size, low weight, and which is simple and is inexpensive to manufacture.

As an example, the combustion of sulfur is integrated with combined-cycle gas and steam turbine systems. These processes do not require an excessive supply of sulfur as a feedstock because the sulfur is recycled, and it employs abundant or relatively inexpensive-to-produce hydrogen sulphide.

The combined-cycle system **10** comprises nine main stages (**I**, **II**, **III**, **IV**, **V, VI**, **VII**, **VIII**, **IX**) each having at least one unit to assist in the process of generating energy. As is illustrated in this embodiment, the Brayton cycle of the system **10** comprises a compressor **10** at stage **I**, a combustor **20** at stage **II**, an ejector **30** at stage **III**, and a gas turbine **40** at stage **IV**.

The Rankine-cycle of the system **10** comprises a heat-recovery steam generator (HRSG) **50** and a steam turbine **55** both at stage **V.** The system **10** comprises also of sulphur condenser(s) **60** at stage **VI**, molecular sieve tower(s) **70** at stage **VII**, an oxygen source **80** at stage **VIII**, and bubbling chamber (*i.e.* the submerged sulphur combustion furnace) **90** at stage **IX**, which all cooperate to constitute a system for generating electrical energy. In one embodiment, stages **II** and **III** are combined into a single device such as a pressure-exchange ejector in which both combustion and pressure exchange can occur.

In one embodiment, the sulphur is evaporated and the sulphur vapor oxidized under pressure, e.g., from about 10 to 35 atmospheres. In one embodiment, the working fluid that is to be expanded in the gas turbine **30** at stage **III** is obtained by steps which comprise evaporating sulphur by bubbling oxygen through the molten sulphur in the submerged-combustion furnace **90** at stage **IX**, oxidizing the sulphur vapor by oxygen in the combustor **20** at stage **II**, and then mixing the product of the oxidation with carbonyl sulphide through the pressure-exchange ejector **30** at stage **III**.

The oxygen-containing gas entering the system **10** (which is composed of oxygen preferably as high as 100 percent) and is obtained from an air separation unit **80** is delivered to the compressor **10** through line **82.** The compressed oxygen is directed through line **11** into the sulphur bubbling chamber **90** in stage **IX**.

The molten sulphur is delivered into a bubbling chamber (*i.e*. the submerged combustion furnace) **90** at stage **IX** through a line **66.** Mukhlenov at al., at GB 1560524 (1980), which is incorporated herein by reference, discloses a method of preparing sulphur dioxide where sulphur is evaporated by bubbling oxygen through the molten sulphur and the sulphur vapor oxidized under a pressure of 1 to 35 atmospheres.

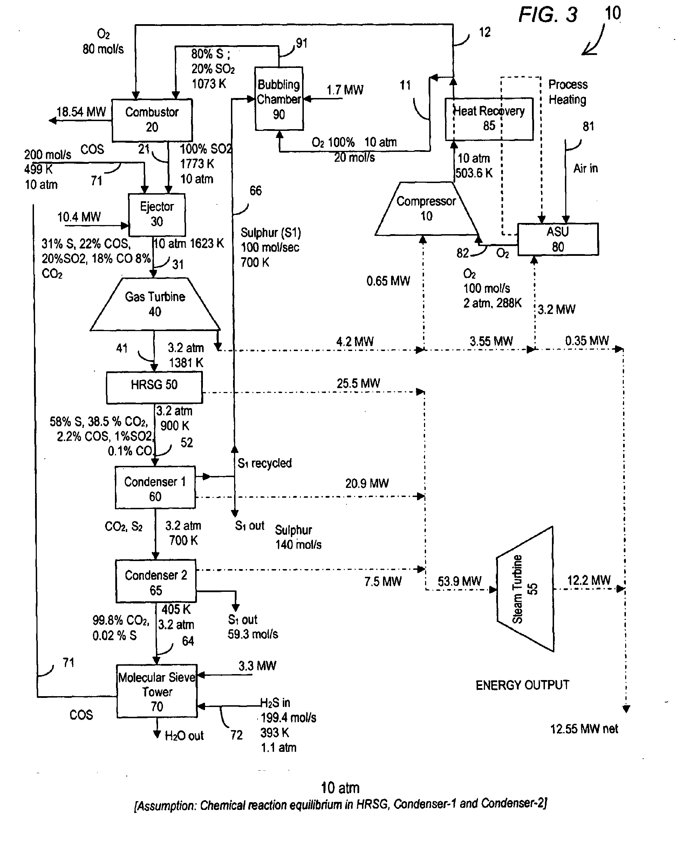

As is shown in FIG. **3**, sulphur vapor and sulphur dioxide exit from the vaporizer **90** as stream **91** is directed into the combustor **20** at stage **II**. Oxygen is injected into the combustor **20** through line **12** and the sulphur vapor is oxidized through stoichiometric (or near-stoichiometric) interaction with oxygen so that only SO₂ is produced.

To achieve the desired chemical composition and temperature for the fluid exiting from the combustor **20** at stage **II** to the ejector **30** at stage **III** the sulphur dioxide gas is mixed with a predetermined amount of carbonyl sulphide that is carried into the ejector **30** through conduit **71.** The carbonyl sulphide is a gas stream of a much lower temperature than the temperature of the sulphur dioxide generated at the combustor **20.** The carbonyl sulphide predominates in relation to the volume of sulphur dioxide that has to be entirely reduced to carbon dioxide and sulphur vapor (as per equation 3), and to desirable ranges of the temperature of 1,350 °C to 1,540 °C (currently the metallurgical limits for turbine inlet temperatures).

Carrying out the stage **IX** of submerged sulphur combustion under pressure makes it possible to utilize the energy of the gas for circulation of the gas mixture in the system. The use of an ejector transfers the energy produced during combustion to a working fluid mixture at much lower temperature, thus overcoming the challenge of handling excessive combustion temperatures in a turbine. The temperature rise of one gas equals the temperature drop in the other gas, regardless of the terminal temperature difference. The heat capacities of the two fluid streams are thus equal or the product of mass flow rate and average specific heat for the two fluid streams is equal. Since a great part of the heat is utilized in the process, this results in the generation of a high-energy gas stream comprising predominantly sulphur vapor and carbon dioxide.

Downstream of the ejector, the hot pressurized working fluid (sulphur vapor and carbon dioxide) is led by line **31** into the turbine **40** at stage **IV**, where the working fluid expands. Finally, the hot mixture of sulphur vapor and sulphur dioxide gas leaves the gas turbine via the exhaust **41** at temperatures up to 640°C and directed to the heat-recovery steam generator (HRSG) **50** where the waste heat from the exhaust of gas turbines is utilized to generate steam for the steam turbine **55** both at stage **V**. In one embodiment, the sulphur vapor portion of the gas turbine effluent is separated from sulphur dioxide by condensation in a device that can serve as a heat recovery steam generator (HRSG) and as a condenser at the same time. As will be appreciated, more than one heat recovery and condensation unit can be provided to accomplish the cooling and condensation of the gases.

A method of sulphur condensation is disclosed by Schendel in U.S. Patent No. 5,204,082 which is incorporated herein by reference.

This new technology is further described with reference to the following illustrative mass and energy balance calculations for the system **10** that is adapted for power generation. These energy balances are presented in Figures **3****,** **4****,** **5****,** and **6****.**

Two sets of simulations were performed at each 10 and 30 atm of upstream operating conditions. The ejector was simulated as a plug flow reactor (PFR). The PFR assumption is an idealized representation of flow in a tubular reactor wherein no radial gradients exist although the concentration, and consequently the reaction rates, can vary along the reactor length. The assumption that the ejector behaves likes a plug flow reactor is not based on any detailed insight on the fluid dynamics of the ejector.

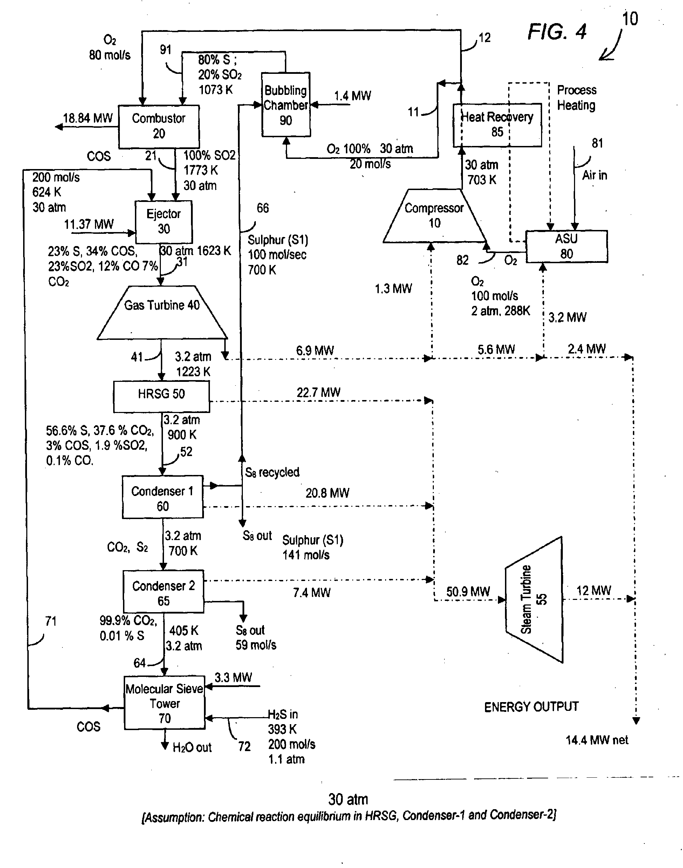

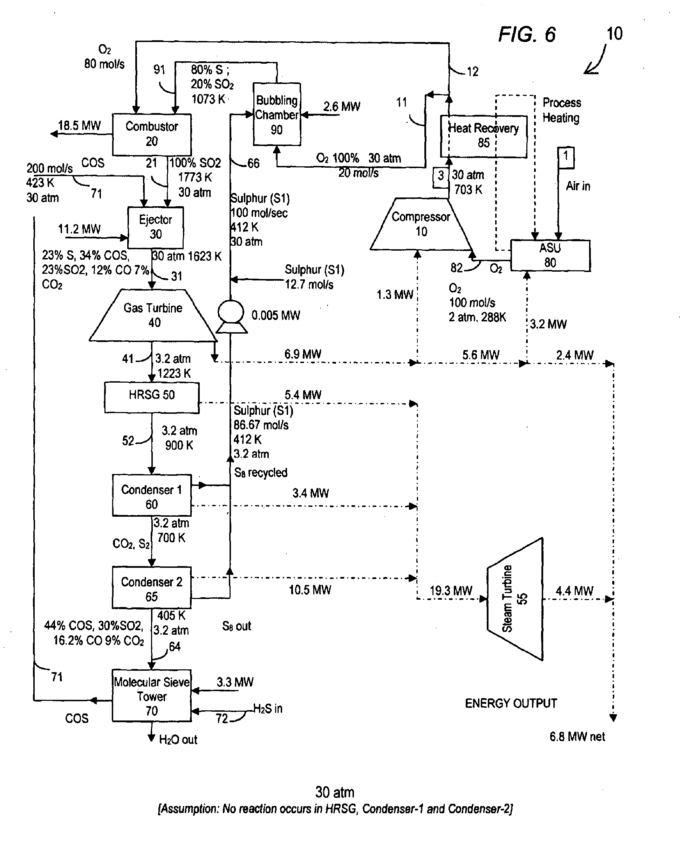

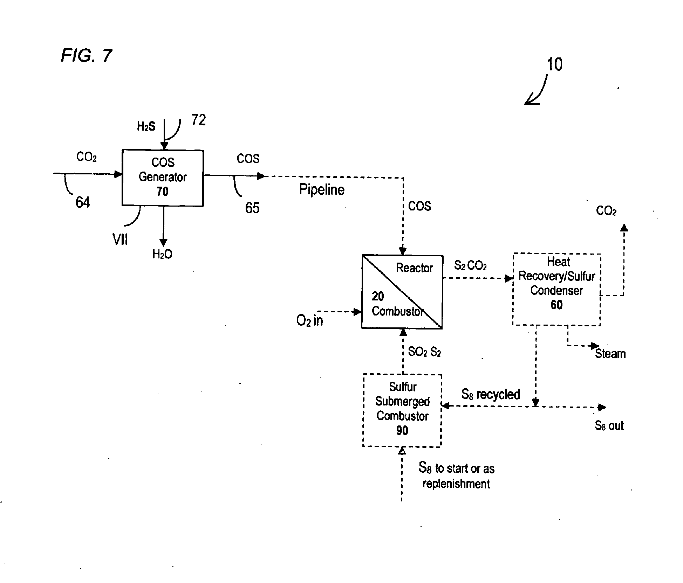

In the first set (Figures **3** and **4**), the gas turbine was modeled as a system with no reactions occurring but phase changes (sulfur condensation) was allowed to occur in the downstream units - the gas turbine (**40**), HRSG (**50**), Condenser-1 (**60**), and Condenser-2 (**65**). In other words, the HRSG, Condenser and Condenser-2 were modeled as being in chemical reaction equilibrium. In the second set (Figures **6** and **7**), the gas turbine (**40**), HRSG (**50**), Condenser (**60**), and Condenser-2 (**65**) were modeled as process units wherein no reactions occurred although heat exchange and phase change were allowed.

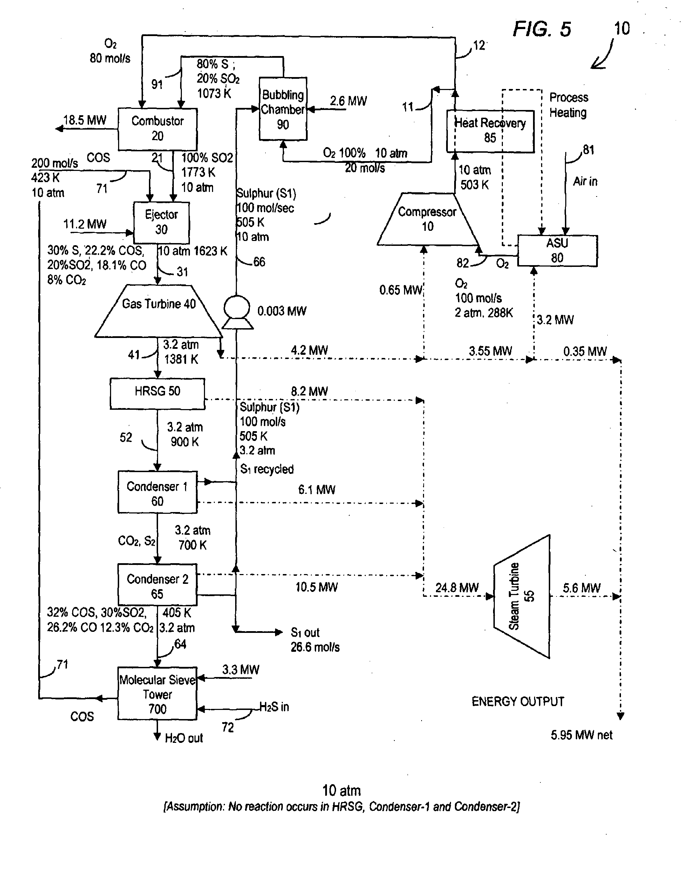

It is possible that chemical reaction equilibrium may not be achieved in the condensers the heat-exchanging HRSG or even in the turbine. To assess the energy that would be recovered if the reacting gas were not equilibrated in any of the process units downstream, a second simulation was completed wherein the gas turbine (**40**), HRSG (50), Condenser-1 (**60**), and Condenser-2 (**65**) were modeled as process units wherein no reactions occurred although heat exchange and phase change were allowed. The results are presented in Figures **5** and **6** for 10 atm and 30 atm cases, respectively.

It may be expected that the chemical composition of gas streams exiting HRSG, Condenser-1 and Condenser-2 may not be equilibrated and, accordingly, the energy requirements for an actual system would be somewhere in between the values depicted in Figures **4** and **6** for 30 atm case and in Figures **3** and **5** for 10 atm cases.

It can be noted that the net energy outputs for the two cases (Figures **3** vs **5** or Figures **4** vs **6**) are quite different.

This novel technology also provides an alternative method for the treatment of hydrogen sulphide. FIG. **1** schematically depicts an embodiment of a system **10** that can also be adapted to be an alternative to the Claus process for sulphur recovery in accordance with one aspect of the present invention. The common sulphur impurities associated with natural gas production and coal gasification plants are hydrogen sulfide (H₂S), and carbonyl sulphide (COS). The latter, in the presence of water vapor in the gases, hydrolyses to H₂S. Hydrogen sulphide is also commonly encountered in petroleum refineries where hydrodesulphurization (i.e. reaction of sulfur with hydrogen to form hydrogen sulfide) is widely used to remove sulphur. In either case, the hydrogen sulfide is converted to elemental sulfur generally by a modified Claus process which is the mainstay of the refining and gas processing industries for H₂S treatment. This conventional process involves a high-temperature partial combustion step, forming sulphur, SO₂, and H₂O, followed by a series of catalytic stages to convert the uncombusted H₂S and SO₂ produced in the furnace. However, the partially oxidizing condition leads to a variety of side reactions and unwanted byproducts. Specifically, the occurrence of COS is an undesired byproduct and, unless the formation and destruction of this species can be controlled precisely, it is difficult to achieve the high sulphur recovery currently demanded by legislation. Although a significant amount of COS can be converted, a complete conversion of COS is not attained. Consequently, the unreacted COS ends up in the tail gas stream at seemingly low concentration levels, where it represents a significant proportion of the total sulphur content. In fact, the COS present in the tail gas is then incinerated to sulphur dioxide (SO₂) and ultimately contributes significantly to sulphur emissions from Claus-type plants.

The illustrated system **10** comprises four main stages (**II**, **VI**, **VII**, **IX**,) each having at least one unit to assist in the process of generating thermal energy and sulphur recovery. Moreover, the illustrated system **10** comprises a combustor/reactor **20** at stage **II**, a heat-recovery/sulphur condenser **60** at stage **VI**, a molecular sieve tower(s) **70** at stage **VII**, and sulphur-submerged combustion furnace **90** at stage **IX**, which all cooperate to constitute a system for recovery of sulphur and for generating thermal energy while minimizing or eliminating harmful emissions to the environment.

Another embodiment of the system **10** is shown in FIG. **7** in which, in accordance with another aspect of the present invention, hydrogen sulphide converted to COS can be shipped (transported) by pipeline to remote locations without the problems associated with transport of very corrosive hydrogen sulphide. It should be especially appreciated that COS (in contrast to H₂S) is compatible with many metals such as aluminum, copper, Monel, carbon steel, 300-series stainless steels, and brass. The compatibility is considerably reduced in the presence of moisture, as is commonly observed with many acid gases [Ref. Svoronos at al., Carbonyl Sulfide: A Review of Its Chemistry and Properties", Ind. Eng. Chem. Res. 2002, 41, 5321].

Sulphur recovered from natural gas has been the major source of elemental sulphur, but sulphur recovered from crude oil, either at refineries, or other processing plants, has been the fastest-growing source. For example, in Canada, such involuntary production of sulphur extracted from heavy bituminous oil sands with a sulphur content of 4-5% is now ramping up rapidly. Large stockpiles of sulphur have accumulated because much of the sulphur produced is relatively inaccessible, and further exacerbated by increasing transport costs, is becoming less economical to sell. As synthetic crude oil production increases, sulphur production could rise to a potentially unmanageable volume if a method for mass transportation is not found.

Referring still to FIG. **7**, this method for transporting sulphur by pipeline therefore comprises steps of receiving a supply of hydrogen sulphide (H₂S), receiving a supply of carbon dioxide (CO₂), generating carbonyl sulphide (COS) (and water as a byproduct) from the hydrogen sulphide and carbon dioxide, and then transporting the COS by pipeline. The supply of carbon dioxide (CO₂) can be drawn from any external source, i.e. the carbon dioxide is not internally recycled. Because the inlet volume of carbon dioxide is equal to the outlet volume the system is a zero-emission system. FIG. **7** further illustrates the delivering of COS through a pipeline to a sulphur-buming/recovery plant at a remote location (i.e. downstream of the pipeline) for subsequent recovery of elemental sulphur and energy generation.

In addition to the four specific applications articulated above, this novel technology can be used in a number of other related applications, as described below.

In accordance with another aspect of the present invention, this novel technology can also be adapted to provide a useful, emission-free method for generating carbon monoxide. The carbon monoxide can, in turn, be used in many different industrial processes and applications, such as, for example, in the production of hydrogen (H₂), in the manufacture of products such as acetic acid and methanol, in the conversion of coal to petrol, in the purification of Nickel and as a component of syngas. This novel method of producing carbon monoxide without causing any harmful emissions to the environment comprises a step of interacting carbonyl sulphide (COS), sulphur dioxide (SO₂), sulphur vapor (S₂) and oxygen (O₂) in a combustor/reactor to yield S₂, carbon dioxide (CO₂) and carbon monoxide (CO). The method then entails rapidly cooling the S₂, CO₂ and CO while condensing the S₂ in order to transform the S₂ into liquid sulphur (S₈) and elemental sulphur (S), the S₂, CO₂ and CO being rapidly cooled in order to prevent CO and S₂ re-associating to form COS. This rapid cooling can be performed in a heat recovery/excess sulphur condenser such as the one designated by reference numeral **60** in FIG. 1. The heat recovery and sulphur condensation can be performed by a single unit or by multiple units. A further step involves separating the CO from the CO₂. This method of producing CO differs from the method of producing COS for transport (the method depicted in FIG. 2) in that re-association of CO and S₂ is inhibited by rapidly cooling the S₂ and CO₂ instead of slowly cooling the CO and S₂ (which permits this re-association to occur). Thus, while the method depicted in FIG. 2 favors re-association of CO and S₂ to form COS, the rapid removal of heat using the heat recovery/excess sulphur condenser **60** yields a quantity of carbon monoxide that can be isolated or extracted for any number of industrial applications.

From the foregoing disclosure, it should now be apparent that this technology provides a system for combusting sulphur having means (e.g. the combustor/reactor **20**) for combusting and reacting sulphur dioxide sulphur vapor, oxygen gas, and carbonyl sulphide to yield hot gases comprising sulphur vapor and carbon dioxide. The system also has means for recovering heat and condensing the hot gases (e.g. heat recovery and sulphur condenser **60**) to yield steam, elemental sulphur, liquid sulphur and carbon dioxide. The system may include means for recycling the carbon dioxide (e.g. recycling lines **64**, **65**) to thereby enable generation of carbonyl sulphide using this recycled carbon dioxide. The system may further include means for generating carbonyl sulphide (e.g. COS generator **70**) from a supply of hydrogen sulphide and a supply of carbon dioxide (e.g. recycled carbon dioxide). The system may further include an evaporation means (e.g. sulphur submerged combustor **90** such as a bubbling chamber) for generating sulphur dioxide and sulphur vapor from oxygen and liquid sulphur. The evaporation means can be used to supply the sulphur dioxide and sulphur vapor to the means for combusting and reacting. The combusting/reacting means may include an ejector for exchanging heat and pressure between the hot combustion gases exhausting from the combustor and a supply of carbonyl sulphide that is delivered into the ejector at a temperature and pressure much lower than a temperature and pressure of the hot combustion gases. The system may include a means for generating electric power from the steam (e.g. a steam turbine). The system may use the steam to perform work through rotary shaft power instead of generating electric power. The system may include a means for extracting elemental sulphur (e.g. Condenser **60** shown in FIG. 3). Optionally, the system may have a means for recycling the liquid sulphur (e.g. line 66) into the evaporation means.

From the foregoing disclosure, it should also be apparent that this new technology provides a system for burning sulphur that entails a combustor/reactor for combusting/reacting sulphur dioxide (SO₂), sulphur vapor (S₂), carbonyl sulphide (COS) and oxygen (O₂) to yield hot combustion gases comprising carbon dioxide (CO₂) and sulphur vapor (S₂). The system further includes an ejector disposed downstream of the combustor/reactor for reducing a temperature and pressure of the hot combustion gases by exchanging heat and pressure with a supply of carbonyl sulphide. The system further includes a carbonyl sulphide generator for generating the carbonyl sulphide supplied to the ejector. One or more heat recovery and sulphur condensation units can be provided for recovering heat from the hot combustion gases and for generating steam from the heat. A steam turbine can be provided for generating power from the steam. To achieve a zero-emission system, the carbon dioxide can be recycled. In one embodiment, the carbon dioxide is recycled from the one or more heat recovery and sulphur condensation units into the carbonyl sulphide generator (e.g. the molecular sieve tower **70** shown in FIG. 3). The carbon dioxide can be reacted with a supply of hydrogen sulphide to generate the carbonyl sulphide used in the ejector. A sulphur submerged combustor can be provided for generating the sulphur dioxide and sulphur vapor that is supplied to the combustor/reactor. In one embodiment, the system includes multiple turbine stages, such as, for example a gas turbine disposed downstream of the ejector for driving an oxygen compressor (that supplies compressed oxygen to the combustor and to a sulphur submerged combustor that generates sulphur dioxide and sulphur vapor for the combustor/reactor from the compressed oxygen and from a supply of liquid sulphur) and a steam turbine disposed downstream of the gas turbine for generating power from the steam. It should be appreciated that the steam turbine can be used to perform useful work (rotary mechanical power) rather than generate electric power. For example, the steam turbine can be used to drive a compressor, such as the oxygen compressor. It should also be appreciated that the gas turbine need not only be used for driving the oxygen compressor. This gas turbine can be used for other purposes, such as generating power, performing useful rotary work, etc.

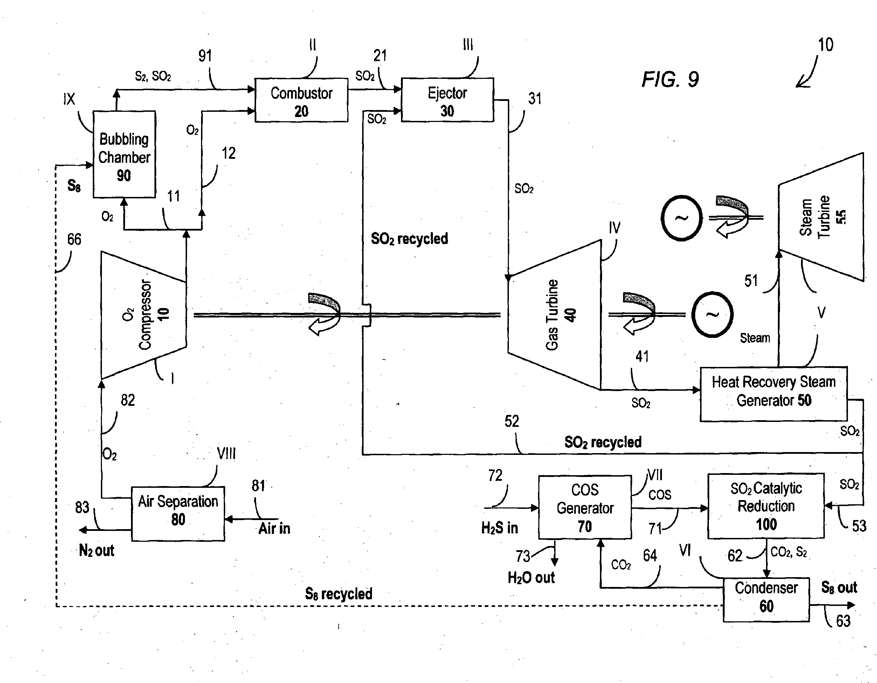

FIG. **9** schematically depicts another embodiment of the present invention in which sulphur dioxide is reacted catalytically with COS downstream of the turbines and wherein sulphur dioxide is recycled into the ejector to reduce the temperature and pressure of the hot combustion gases emerging from the combustor. In other words, in the embodiment depicted in FIG. **9****,** the reduction of sulphur dioxide is carried out at a low temperature in the presence of a catalyst. This enables de-energized sulphur dioxide to be recycled into the ejector for pressure- and heat-exchange while the portion of the sulphur dioxide that is not recycled into the ejector is treated catalytically downstream of at least one of the turbines. The catalytic reduction of the sulphur dioxide produces sulphur vapor which can be condensed and recycled to a bubbling chamber, as will elaborated below.

As shown in FIG. **9****,** this system **10** includes a combustor **20** for combusting sulphur vapor (S₂) and oxygen (O₂) to yield hot combustion gases comprising sulphur dioxide (SO₂). These hot combustion gases are fed into an ejector **30** disposed downstream of the combustor for reducing a temperature and pressure of the hot combustion gases by exchanging heat and pressure with a supply of recycled sulphur dioxide gas to generate a stream of sulphur dioxide gas at a reduced temperature and pressure. As shown in this figure, the recycled sulphur dioxide gas is recycled from downstream of at least, one turbine that harnesses energy from the stream of sulphur dioxide emerging from the ejector. In this example configuration, a gas turbine **40** receives the stream of sulphur dioxide gas emerging from the ejector, e.g. to do useful work such as, for example, driving an oxygen compressor **10.** In addition, a heat recovery steam generator **50** can be provided to generate steam for a steam turbine **55.** The sulphur dioxide can be recycled from the heat recovery steam generator **50,** as shown in this example. This sulphur dioxide has a much lower temperature and pressure than the sulphur dioxide emerging from the combustor. As shown in this figure, another portion of sulphur dioxide is drawn off for being catalytically reduced (in catalytic reduction vessel **100**) in the presence of COS to form sulphur vapor and carbon dioxide. The sulphur vapor is then condensed at condenser **60.** Some of the liquid sulphur is then recycled via line 66 to a bubbling chamber **90** which is also fed with a supply of oxygen gas. The oxygen gas can be pressurized by oxygen compressor **10.** The oxygen gas is injected beneath a surface of a pool of molten sulfur maintained in the bubbling chamber **90** above its auto-ignition temperature. As a result, a substantial amount of sulphur is vaporized. This vaporized sulphur can then be combusted in a stoichiometric or nearly stoichiometric interaction with oxygen. The oxygen compressor **10** can also be used to supply the oxygen into the combustor **20.**

As further depicted in FIG. **9****,** the system further comprises a COS generator **70** for generating COS from a supply of hydrogen sulphide (e.g. inlet line **72**) and a supply of carbon dioxide (e.g. inlet line **64**). As mentioned above, the COS reacts catalytically with sulphur dioxide to yield sulphur vapor. This sulphur vapor is supplied via line **62** to the condenser **60** for condensation into the liquid sulphur. Carbon dioxide is recycled from the condenser to the COS generator as shown in FIG. **9****.** There is therefore no carbon dioxide emitted to the atmosphere. Likewise, all the sulphur dioxide that is not catalytically reduced is recycled into the ejector, so no sulphur dioxide is emitted to the environment either.

The system shown in FIG. **9** therefore implements a method for generating thermodynamic energy from sulphur combustion. This method entails catalytically reducing sulphur dioxide (SO₂) in the presence of carbonyl sulphide (COS) (e.g. in reduction vessel **100**) to generate carbon dioxide and sulphur vapor (S₂), condensing (e.g. in condenser **60**) the sulphur vapor (S₂) to yield liquid sulphur, evaporating the liquid sulphur (e.g. in bubbling chamber **90**) to generate sulphur dioxide (SO₂) gas and sulphur vapor (S₂), combusting (e.g. in combustor **20**) the sulphur vapor (S₂) with oxygen gas (O₂) to generate hot sulphur dioxide (SO₂) gas, mixing in an ejector **30** the hot sulphur dioxide (SO₂) gas with cooler, lower-pressure sulphur dioxide (SO₂) gas that is recycled (through line **52**) from downstream of at least one turbine (e.g. gas turbine **40** and/or steam turbine **55**), and harnessing energy in the sulphur dioxide (SO₂) gas that emerges from the ejector (e.g. using the gas turbine **40** and/or the steam turbine **55**).

In each of the foregoing embodiments, it should be noted that the oxygen supplied to the sulphur submerged combustor (e.g. bubbling chamber **90**) can be supplied under pressure. As shown in the example configuration shown in FIG. **2****,** the oxygen gas can be pressurized using a compressor **10** driven by the gas turbine **40** downstream of the ejector **30.** The oxygen compressor 10 feed compressed oxygen to both the sulphur submerged combustor (e.g. bubbling chamber **90**) and the combustor **20.** Pressurizing the oxygen entering the bubbling chamber thereby pressurizes the sulphur vapor and sulphur dioxide exiting from the bubbling chamber **90** so that all the gases entering the combustor **20** are pressurized (to achieve higher energy output).

Although specific embodiments of the invention have been described and illustrated, such embodiments should not to be construed in a limiting sense. Although not shown, each of the stages may comprise multiple units, for example multiple units for the compressor **10** or multiple gas turbine **50** units. Although not shown in the figures, it will be understood that ancillary elements and machinery such as pumps, intermediate valves or other modifications to the system **10** to adapt it for combusting of sulfur vapor may be used for proper operation of the embodiments shown. These ancillary elements and modifications are well understood by those skilled in the art. The units at each stage **I** through **V** of the combustion cycle of the first embodiment and in other embodiments may be appropriately scaled depending upon the operational scale and purpose of the facility implementing one or more of the aspects of the present invention.

Various modifications of form, arrangement of components, steps, details and order of operations of the embodiments illustrated, as well as other embodiments of the invention, will be apparent to persons skilled in the art upon reference to this description. It is therefore contemplated that the appended claims will cover such modifications and embodiments as fall within the true scope of the invention. In the specification including the claims, numeric ranges are inclusive of the numbers defining the range. Citation of references herein shall not be construed as an admission that such references are prior art to the present invention.

## Claims

1. A method for generating thermodynamic energy from sulphur combustion, the method comprising steps of:
generating carbonyl sulphide (COS) by reacting hydrogen sulphide (H₂S) with carbon dioxide (CO₂) in a COS generator (70);
transporting the carbonyl sulphide (COS) via pipeline (71) to a sulphur-burning plant;
at the sulphur-burning plant, evaporating liquid sulphur to generate sulphur dioxide (SO₂) gas and sulphur vapor (S₂);
combusting the sulphur vapor (S₂) with oxygen gas (O₂) to generate sulphur dioxide (SO₂) gas and heat energy;
reducing the sulphur dioxide (SO₂) to carbon dioxide (CO₂) and sulphur vapor (S₂) by reacting the sulphur dioxide (SO₂) with carbonyl sulfide (COS) to generate energized reaction products whereby an amount of carbon dioxide produced by reducing the sulphur dioxide is equal to an amount of carbon dioxide consumed by generating the carbonyl sulphide in the COS generator (70) such that no net carbon dioxide is generated by the method; and
harnessing energy in the energized reaction products.

2. The method as claimed in claim 1 wherein the step of reducing the sulphur dioxide (SO₂) to carbon dioxide (CO₂) and sulphur vapor (S₂) is performed at a high temperature of at least 1000 degrees Celsius.

3. The method as claimed in claim 1 wherein the step of reducing the sulphur dioxide (SO₂) to carbon dioxide (CO₂) and sulphur vapor (S₂) is performed catalytically at a low temperature lower than 1000 degrees Celsius.

4. The method as claimed in any one of claims 1 to 3 further comprising a step of recycling the carbon dioxide (CO₂) for reacting with hydrogen sulfide (H₂S) to generate the carbonyl sulphide (COS).

5. The method as claimed in any one of claims 1 to 4 further comprising steps of:
condensing the sulphur vapor (S₂) to yield liquid S₈ and elemental sulphur (S); and
extracting the elemental sulphur (S), and
wherein the liquid S₈ is returned to a bubbling chamber supplied with oxygen (O₂) for generating SO₂ and sulphur vapour.

6. The method as claim in claim 5 further comprising steps of:
maintaining a pool of molten sulphur in the bubbling chamber at or above its auto-ignition temperature; and
injecting oxygen gas beneath a surface of the pool of molten sulphur to cause the sulphur to vaporize.

7. The method as claimed in any preceding claim further comprising a step of using an ejector to perform pressure exchange and heat exchange between hot SO₂ gas emerging from the combustor and cooler COS gas that is recycled into the ejector.

8. The method as claimed in claim 7 wherein the COS gas is recycled into the ejector by re-association of COS in lower temperature process units and/or from a carbonyl sulphide (COS) generator into which hydrogen sulphide (H₂S) and carbon dioxide (CO₂) are injected.

9. The method as claimed in claim 8 wherein the carbon dioxide injected into the COS generator is recycled from one or more heat recovery/sulphur condensation units.

10. The method as claimed in claim 8 or claim 9 wherein the carbonyl sulphide is generated in at least one dryer comprising a desiccant wherein the desiccant has sufficient water affinity to convert the hydrogen sulphide to carbonyl sulphide, wherein the dessicant is selected from the group consisting of an alumina dessicant and a molecular sieve tower.

11. A system for generating power, the system comprising:
a COS generator (70) for generating carbonyl sulphide (COS) by reacting hydrogen sulphide (H₂S) with carbon dioxide (CO₂);
a pipeline (71) for transporting the carbonyl sulphide (COS) to a sulphur-burning plant;
a combustor/reactor (20) at the sulphur-burning plant for combusting sulphur vapor (S₂), and oxygen (O₂) to produce sulphur dioxide (SO₂) and to reacting the sulphur dioxide (SO₂) with carbonyl sulphide (COS) to yield energized gases comprising carbon dioxide (CO₂) and sulphur vapor (S₂) whereby an amount of carbon dioxide produced by reacting the sulphur dioxide with carbonyl sulphide is equal to an amount of carbon dioxide consumed by generating the carbonyl sulphide in the COS generator (70) such that no net carbon dioxide is generated by the system;
one or more heat recovery/sulphur condensation units (60) for recovering heat from the energized gases and for generating steam from the heat; and
a steam turbine (55) for generating power from the steam.

12. The system as claimed in claim 11 wherein the supply of carbon dioxide is obtained as a product of sulphur dioxide reduction by carbonyl sulphide and separated from sulphur vapor by one or more heat recovery/sulphur condensation units (60) that condenses the sulphur vapor to yield elemental sulphur (S), liquid S₈, the carbon dioxide being fully recycled to regenerate COS by reacting the carbon dioxide with the supply of hydrogen sulphide.

13. The system as claimed in claim 12 further comprising a bubbling chamber (90) for receiving oxygen (O₂) and recycled liquid S₈ from the one or more heat recovery/sulphur condensation units, and for generating sulphur dioxide (SO₂) and sulphur vapor (S₂) as a predominant out fluent, and wherein the sulphur vapor is generated by a bubbling chamber for receiving compressed oxygen (O₂) from an oxygen compressor and for receiving recycled liquid S₈, and for generating the sulphur dioxide (SO₂) and sulphur vapor (S₂) that are delivered to the combustor/reactor..

14. The system as claimed in any one of claims 11 to 13 wherein the combustor/reactor (20) comprises:
a combustor for combusting sulphur vapor and oxygen gas; and
an ejector (30) connected downstream to the combustor for receiving hot combustion gases comprising sulphur dioxide and for receiving a supply of cooler carbonyl sulphide (COS) gas, the ejector (30) enabling the hot combustion gases and the cooler carbonyl sulphide gas to exchange heat and pressure, the ejector (30) thereby discharging carbon dioxide and sulphur gases at a temperature below a metallurgic limit of a gas turbine (40) disposed downstream of the ejector (30), the gas turbine (40) being connected to an oxygen compressor (10) for compressing oxygen that is to be delivered into the combustor.

15. The system as claimed in any one of claims 11 to 14 wherein the carbonyl sulphide is generated in at least one dryer comprising a desiccant wherein the desiccant has sufficient water affinity to convert the hydrogen sulphide to carbonyl sulphide, wherein the desiccant is selected from the group consisting of a molecular sieve and an alumina desiccant.

## Patentansprüche

1. Verfahren zur Erzeugung thermodynamischer Energie aus der Verbrennung von Schwefel, wobei das Verfahren folgende Schritte umfasst:
Erzeugung von Carbonylsulfid (COS) durch Reaktion von Schwefelwasserstoff (H₂S) mit Kohlendioxid (CO₂) in einem COS-Generator (70);
Beförderung des Carbonylsulfids (COS) durch eine Rohrleitung (71) an eine Schwefelverbrennungsanlage;
in der Schwefelverbrennungsanlage, Verdampfung von flüssigem Schwefel zur Erzeugung von Schwefeldioxid (SO₂)-gas und Schwefeldampf (S₂);
Verbrennung des Schwefeldampfs (S₂) mit Sauerstoffgas (O₂) zur Erzeugung von Schwefeldioxid (SO₂)-gas und Wärmeenergie;
Reduktion des Schwefeldioxids (SO₂) zu Kohlendioxid (CO₂) und Schwefeldampf (S₂) durch Reaktion des Schwefeldioxids (SO₂) mit Carbonylsulfid (COS) zur Erzeugung von energiegeladenen Reaktionsprodukten, wobei eine Menge von Kohlendioxid, das durch Reduktion des Schwefeldioxids erzeugt wird, einer Menge von Kohlendioxid gleich ist, das durch Erzeugung des Carbonylsulfids in dem COS-Generator (70) verbraucht wird, so dass kein Netto-Kohlendioxid durch das Verfahren erzeugt wird; und
Nutzung von Energie in den energiegeladenen Reaktionsprodukten.

2. Verfahren nach Anspruch 1, worin der Schritt des Reduzierens von Schwefeldioxid (SO₂) zu Kohlendioxid (CO₂) und Schwefeldampf (S₂) bei einer hohen Temperatur von mindestens 1000 Grad Celsius durchgeführt wird.

3. Verfahren nach Anspruch 1, worin der Schritt des Reduzierens von Schwefeldioxid (SO₂) zu Kohlendioxid (CO₂) und Schwefeldampf (S₂) katalytisch bei einer niedrigen Temperatur von weniger als 1000 Grad Celsius durchgeführt wird.

4. Verfahren nach einem der Ansprüche 1 bis 3, ferner umfassend einen Schritt von Recycling des Kohlendioxids (CO₂) zur Reaktion mit Schwefelwasserstoff (H₂S), um das Carbonylsulfid (COS) zu erzeugen.

5. Verfahren nach einem der Ansprüche 1 bis 4, ferner die Schritte umfassend:
Kondensieren des Schwefeldampfs (S₂), um flüssigen S₈ und elementaren Schwefel (S) zu ergeben; und
Ausziehen des elementaren Schwefels (S), und
worin der flüssige S₈ zu einer Blasenkammer zurückgeführt wird, die mit Sauerstoff (O₂) gespeist wird, um SO₂ und Schwefeldampf zu erzeugen.

6. Verfahren nach Anspruch 5, ferner die Schritte umfassend:
Beibehalten eines Bads von geschmolzenem Schwefel in der Blasenkammer bei seiner Selbstentzündungstemperatur oder über seine Selbstentzündungstemperatur; und
Einspritzen von Sauerstoffgas unterhalb einer Oberfläche des Bads von geschmolzenem Schwefel, um den Schwefel zur Verdampfung zu bringen.

7. Verfahren nach einem der vorhergehenden Ansprüche, ferner umfassend einen Schritt von Verwendung eines Ejektors, um einen Druckaustausch und einen Wärmeaustausch zwischen dem heißen SO₂-Gas, das aus dem Verbrenner austritt, und kühleren COS-Gas, das in den Ejektor hinein recycelt wird, durchzuführen.

8. Verfahren nach Anspruch 7, worin das COS-Gas durch Wiederassoziation von COS in Niedrigtemperaturverarbeitungseinheiten in den Ejektor hinein und/oder aus einem Carbonylsulfid (COS)-Generator recycelt wird, in welchen Schwefelwasserstoff (H₂S) und Kohlendioxid (CO₂) eingespritzt werden.

9. Verfahren nach Anspruch 8, worin das Kohlendioxid, das in den COS-Generator hinein eingespritzt wird, aus einer oder mehreren Wärmerückgewinnungs-/Schwefelkondensationseinheiten recycelt wird.

10. Verfahren nach Anspruch 8 oder nach Anspruch 9, worin das Carbonylsulfid in zumindest einem Trockner erzeugt wird, der ein Trockenmittel umfasst, worin das Trockenmittel eine ausreichende Wasseraffinität aufweist, um den Schwefelwasserstoff in Carbonylsulfid umzuwandeln, worin das Trockenmittel aus der Gruppe gewählt wird, die aus einem Aluminiumoxidtrockenmittel und einem Molekularsieb-Turm besteht.

11. System zur Erzeugung von Strom, wobei das System Folgendes umfasst:
einen COS-Generator (70) zur Erzeugung von Carbonylsulfid (COS) durch Reaktion von Schwefelwasserstoff (H₂S) mit Kohlendioxid (CO₂) ;
eine Rohrleitung (71) zur Beförderung des Carbonylsulfids (COS) an eine Schwefelverbrennungsanlage;
einen Verbrenner/Reaktor (20) an der Schwefelverbrennungsanlage zur Verbrennung von Schwefelwasserstoff (H₂S) und Sauerstoff (O₂) zur Erzeugung von Schwefeldioxid (SO₂) und zur Reaktion des Schwefeldioxids (SO₂) mit Carbonylsulfid (COS) zum Erbringen von energiegeladenen Gasen, die Kohlendioxid (CO₂) und Schwefeldampf (S₂) umfassen, wobei eine Menge von Kohlendioxid, das durch Reaktion des Schwefeldioxids mit Carbonylsulfid erzeugt wird, einer Menge von Kohlendioxid gleich ist, das durch Erzeugung des Carbonylsulfids in dem COS-Generator (70) verbraucht wird, so dass kein Netto-Kohlendioxid durch das Verfahren erzeugt wird;
eine oder mehrere Wärmerückgewinnungs-/Schwefelkondensationseinheiten (60) zur Rückgewinnung von Wärme aus den energiegeladenen Gasen und zur Erzeugung von Dampf aus der Wärme; und
eine Dampfturbine (55) zur Erzeugung von Strom aus dem Dampf.

12. System nach Anspruch 11, worin die Versorgung von Kohlendioxid als Produkt der Reduktion von Schwefeldioxid durch Carbonylsulfid erhalten und von Schwefeldampf durch eine oder mehrere Wärmerückgewinnungs-/Schwefelkondensationseinheiten (60) getrennt wird, die den Schwefeldampf kondensieren, um elementaren Schwefel (S), flüssigen S₈ zu ergeben, wobei das Kohlendioxid völlig recycelt wird, um COS durch Reagieren des Kohlendioxids mit der Versorgung von Schwefelwasserstoff zu regenerieren.

13. System nach Anspruch 12, ferner umfassend eine Blasenkammer (90) zur Aufnahme von Sauerstoff (O₂) und von recyceltem flüssigem S₈ aus der einen oder mehreren Wärmerückgewinnungs-/Schwefelkondensationseinheiten, und zur Erzeugung von Schwefeldioxid (SO₂) und von Schwefeldampf (S₂) als Hauptausfluss, und worin der Schwefeldampf von einer Blasenkammer erzeugt wird, um komprimierten Sauerstoff (O₂) aus einem Sauerstoffkompressor und recycelten flüssigen S₈ aufzunehmen, sowie um das Schwefeldioxid (SO₂) und den Schwefeldampf (S₂) zu erzeugen, die dem Verbrenner/Reaktor geliefert werden.

14. System nach einem der Ansprüche 11 bis 13, worin der Verbrenner/Reaktor (20) Folgendes umfasst:
einen Verbrenner zur Verbrennung von Schwefeldampf und von Sauerstoffgas; und
einen Ejektor (30), der stromabwärts mit dem Verbrenner verbunden ist, um heiße Verbrennungsgase aufzunehmen, die Schwefeldioxid umfassen, und um eine Einspeisung von kühlerem Carbonylsulfid (COS)-Gas aufzunehmen, worin der Ejektor (30) den heißen Verbrennungsgasen und dem kühleren Carbonylsulfidgas ermöglicht, Wärme und Druck auszutauschen, und der Ejektor (30) damit Kohlendioxid und Schwefelgase bei einer Temperatur unterhalb einer metallurgischen Grenze einer Gasturbine (40), die dem Ejektor (30) nachgeschaltet angeordnet ist, ausstößt, wobei die Gasturbine (40) mit einem Sauerstoffverdichter (10) verbunden ist, um den Sauerstoff zu komprimieren, der in den Verbrenner hinein eingespeist wird.

15. System nach einem der Ansprüche 11 bis 14, worin das Carbonylsulfid in zumindest einem Trockner erzeugt wird, der ein Trockenmittel umfasst, worin das Trockenmittel eine ausreichende Wasseraffinität aufweist, um den Schwefelwasserstoff in Carbonylsulfid umzuwandeln, worin das Trockenmittel aus der Gruppe gewählt wird, die aus einem Molekularsieb und einem Aluminiumoxidtrockenmittel besteht.

## Revendications

1. Procédé pour produire de l'énergie thermodynamique à partir de la combustion de soufre, le procédé comprenant les étapes suivantes
génération de sulfure de carbonyle (COS) par réaction de sulfure d'hydrogène (H₂S) avec du dioxyde de carbone (CO₂) dans un générateur de COS (70) ;
transport du sulfure de carbonyle (COS) à travers un gazoduc (71) jusqu'à une installation de combustion de soufre ;
dans l'installation de combustion de soufre, évaporation de soufre liquide pour générer du dioxyde de soufre (SO₂) gazeux et de la vapeur de soufre (S₂);
combustion de la vapeur de soufre (S₂) avec de l'oxygène gazeux (O₂) pour générer du dioxyde de soufre (SO₂) et de l'énergie thermique ;
réduction du dioxyde de soufre (SO₂) en dioxyde de carbone (CO₂) et vapeur de soufre (S₂) par réaction du dioxyde de soufre (SO₂) avec du sulfure de carbonyle (COS) pour générer des produits de réaction, de façon qu'une quantité de dioxyde de carbone produite par la réduction du dioxyde de soufre (SO₂) soit égale à une quantité de dioxyde de carbone consumée par la génération de sulfure de carbonyle dans le générateur de COS (70), et qu'aucun dioxyde de carbone ne soit généré par le procédé ; et
exploitation de l'énergie présente dans les produits de réaction riches en énergie.

2. Procédé selon la revendication 1, dans lequel l'étape de réduction du dioxyde de soufre (SO₂) en dioxyde de carbone (CO₂) et vapeur de soufre (S₂) est conduite à une haute température d'au moins 1000 degrés Celsius.

3. Procédé selon la revendication 1, dans lequel l'étape de réduction du dioxyde de soufre (SO₂) en dioxyde de carbone (CO₂) et vapeur de soufre (S₂) est conduite par voie catalytique à une basse température inférieure à 1000 degrés Celsius.

4. Procédé selon n'importe laquelle des revendications 1 à 3, comprenant par ailleurs une étape de recyclage du dioxyde de carbone (CO₂) destiné à la réaction avec le sulfure d'hydrogène (H₂S) pour la génération du sulfure de carbonyle (COS).

5. Procédé selon n'importe laquelle des revendications 1 à 4, comprenant par ailleurs les étapes suivantes :
condensation du vapeur de soufre (S₂), pour donner du soufre liquide S₈ et du soufre élémentaire (S) ; et
extraction du soufre élémentaire (S) et
dans lequel le liquide S₈ est renvoyé à une chambre de bullage alimentée en oxygène (O₂) pour générer du SO₂ et de la vapeur de soufre.

6. Procédé selon la revendication 5 comprenant par ailleurs les étapes suivantes :
maintien d'un bain de soufre fondu dans la chambre de bullage à une température égale ou supérieure à sa température d'allumage spontané ; et
injection d'oxygène gazeux au-dessous d'une surface du bain de soufre fondu pour faire vaporiser le soufre.

7. Procédé selon n'importe laquelle des revendications précédentes, comprenant par ailleurs une étape d'emploi d'un éjecteur pour réaliser un échange de pression et un échange de chaleur entre le SO₂ gazeux sortant du brûleur et le COS gazeux plus froid recyclé dans l'éjecteur.

8. Procédé selon la revendication 7, dans lequel le COS gazeux est recyclé dans l'éjecteur par réassociation du COS en unités de traitement à température inférieure et/ou d'un générateur de sulfure de carbonyle (COS) dans lequel sont injectés le sulfure d'hydrogène (H₂S) et le dioxyde de carbone (CO₂).

9. Procédé selon la revendication 8, dans lequel le dioxyde de carbone injecté dans le générateur de COS est recyclé à partir d'une ou plusieurs unités de récupération de chaleur/condensation de soufre.

10. Procédé selon la revendication 8 ou la revendication 9, dans lequel le sulfure de carbonyle est généré dans au moins un sécheur comprenant un desséchant dans lequel le desséchant a une affinité pour l'eau suffisante à convertir le sulfure d'hydrogène en sulfure de carbonyle, dans lequel le desséchant est choisi dans le groupe constitué par un desséchant d'alumine et une colonne de tamis moléculaire.

11. Système de génération d'énergie électrique, le système comprenant :
un générateur de COS (70) pour la génération de sulfure de carbonyle (COS) par réaction de sulfure d'hydrogène (H₂S) avec du dioxyde de carbone (CO₂);
un gazoduc (71) pour le transport du sulfure de carbonyle (COS) jusqu'à une installation de combustion de soufre ;
un brûleur/réacteur (20) dans l'installation de combustion de soufre pour la combustion de la vapeur de soufre (S₂) et de l'oxygène (O₂) pour produire du dioxyde de soufre (SO₂) et pour la réaction du dioxyde de soufre (SO₂) avec le sulfure de carbonyle (COS) pour générer des gaz riches en énergie comprenant du dioxyde de carbone (CO₂) et de la vapeur de soufre (S₂), de façon qu'une quantité de dioxyde de carbone produite par la réaction du dioxyde de soufre avec le sulfure de carbonyle soit égale à une quantité de dioxyde de carbone consumée par la génération de sulfure de carbonyle dans le générateur de COS (70), et qu'aucun dioxyde de carbone ne soit généré par le système ;
une ou plusieurs unités de récupération de chaleur / condensation de soufre (60) pour récupérer de la chaleur des gaz riches en énergie, et pour générer de la vapeur de la chaleur ; et
une turbine à vapeur (55) pour générer de l'énergie électrique de la vapeur.

12. Système selon la revendication 11, dans lequel le dioxyde de carbone à alimenter est obtenu comme un produit de la réduction du dioxyde de soufre par le sulfure de carbonyle, et est séparé de la vapeur de soufre par une ou plusieurs unités de récupération de chaleur / condensation de soufre (60), qui condensent la vapeur de soufre pour donner du soufre élémentaire (S), du S₈ liquide, le dioxyde de carbone étant entièrement recyclé pour générer du COS par réaction du dioxyde de carbone avec le sulfure d'hydrogène alimenté.

13. Système selon la revendication 12, comprenant par ailleurs une chambre de bullage (90) pour alimenter de l'oxygène (O₂) et du liquide S₈ recyclé provenant de l'une ou des plusieurs unités de récupération de chaleur / condensation de soufre et pour générer du dioxyde de soufre (SO₂) et de la vapeur de soufre (S₂) comme effluent prédominant, et dans lequel la vapeur de soufre est générée par une chambre de bullage pour à recevoir de l'oxygène (O₂) comprimé provenant d'un compresseur d'oxygène et à recevoir du S₈ liquide et à générer le dioxyde de soufre (SO₂) et la vapeur de soufre (S₂) alimentés au brûleur/réacteur.

14. Système selon n'importe laquelle des revendications 11 à 13, dans lequel le brûleur/réacteur (20) comprend :
un brûleur pour la combustion de la vapeur de soufre et de l'oxygène gazeux ; et
un éjecteur (30) relié en aval du brûleur, pour recevoir des gaz de combustion chauds comprenant du dioxyde de soufre et pour recevoir une alimentation en sulfure de carbonyle (COS) gazeux plus froid, l'éjecteur (30) permettant l'échange de chaleur et de pression entre les gaz de combustion chauds et le sulfure de carbonyle gazeux plus froid, l'éjecteur (30) déchargeant donc du dioxyde de carbone et du soufre gazeux à une température inférieure à une limite métallurgique d'une turbine à gaz (40) située en aval de l'éjecteur (30), la turbine à gaz (40) étant reliée à un compresseur d'oxygène (10) pour comprimer l'oxygène à alimenter dans le brûleur.

15. Système selon n'importe laquelle des revendications 11 à 14, dans lequel le sulfure de carbonyle est généré dans au moins un sécheur comprenant un desséchant dans lequel le desséchant a une affinité pour l'eau suffisante à convertir le sulfure d'hydrogène en sulfure de carbonyle, dans lequel le desséchant est choisi dans le groupe constitué par un tamis moléculaire et un desséchant d'alumine.
